# EUROPEAN PATENT APPLICATION

(11) **EP 4 173 803 A1**
(43) Date of publication of application: **03.05.2023**
(21) Application number: 21461615.3
(22) Date of filing: 30.10.2021
(51) Int. Cl.: B29C 64/124, B29C 64/343, B29C 64/393, B33Y 40/00, B33Y 50/02

(54) **A SYSTEM FOR MAINTAINING CONSTANT PRINTING CONDITIONS FOR A UV LCD 3D PRINTER**

(71) Applicant: ZORTRAX S.A., 10-409 Olsztyn (PL)
(72) Inventor: Chendoszko, Artur, Olsztyn (PL); Urban, Krzysztof, Olsztyn (PL)
(74) Representative: Kancelaria Eupatent.pl Sp. z.o.o

(57) **Abstract**

A system for maintaining constant printing conditions for a UV LCD 3D printer, the UV LCD 3D printer comprising a UV light source (10), an LCD display (20) and a printing platform (30), wherein the system comprises: a vat (40) for a photo-curable resin, the vat (40) being located above the LCD display (20); a flexible membrane (41) forming a bottom of the vat (40); and a resin level control unit comprising: a resin tank (61); a resin level sensor (50) for controlling the level of the resin in the vat (40); and a peristaltic pump (60) for transferring the resin from the resin tank (61) to the vat (40). The system further comprises: a wiper (70) located above and adjacently to the flexible membrane (41), for distributing the resin on the flexible membrane (41); and air ducts (42) located between the flexible membrane (41) and the LCD display (20) for drawing air trapped under the flexible membrane (41) during the movement of the wiper (70).

## Description

### TECHNICAL FIELD

The disclosed invention relates to a system for maintaining constant printing conditions for a UV LCD 3D printer.

### BACKGROUND

There are different known techniques for printing 3D objects, by an additive manufacturing process, for which different types of 3D printers are used.

One of common techniques is stereolithography (SLA). It uses a laser, preferably a UV laser, directed by galvanometers, to cure the resin. Galvanometers can be thought of as mirrors used to guide the laser beam through the transparent tank bottom to a particular point on the build platform.

Another known technique is a digital light processing (DLP) in which the resin is cured with a digital projector instead of a laser. The projector projects images of whole layers onto the bottom of a vat. Light is selectively directed using a digital micromirror device (DMD), which is a component consisting of hundreds of thousands of tiny mirrors. Layers generated using DLP printers consist of so-called voxels, which are a 3D equivalent of pixels.

There is also known an LCD 3D printing technique which is similar to the DLP in that it also displays an entire layer of the printed object on the vat photopolymer. The key difference is that the UV light is emitted by an array of LEDs shining through a liquid crystal display (LCD), as opposed to the projector in the DLP. The LCD acts as a mask, revealing only the pixels necessary for the current layer. Therefore, no special device is required to direct the light, as is the case of both SLA and DLP techniques.

In each type of the printer, the resin has to be initially supplied to the vat from the resin tank, and subsequently, during the printing process, the vat is gradually refilled to maintain constant level of the resin inside it.

For example, a US patent application US20200338812A1 discloses additive fabrication device comprising a container removably attached to the additive fabrication device and a detector configured to sense a fluid level of photopolymer resin within the container, wherein the detector does not contact the container. The 3D solid objects are created by successively forming thin layers of a curable polymer resin which is in the container. Typically, first layer is created onto a build platform and then one layer on top of another. The device comprises a controller for automatically controlling introduction of resin from the reservoir into the container. The resin may be transferred from the reservoir to the container by means of an electro-mechanical valve that, when activated, induces fluid flow of photopolymer resin into the container via gravitational forces.

A US patent application US20200298471A1 discloses an additive manufacturing apparatus in which a photo-curable resin is cured through exposure to radiation when fabricating an object, wherein the photocurable resin in a vat/tank is periodically replaced according to its temperature. In particular the apparatus comprises two refrigerated resin reservoirs. One reservoir remains empty, ready to be filled with the warm resin from the vat and another with cold resin to be transferred to the vat. The resin in transferred through a piping arrangement between the reservoirs and the vat by means of pumps.

A US patent application US20070074659A1 discloses a stereolithography apparatus having a resin vat with resupply containers in one-way flow communication and a levelling container in two-way flow communication, an automatic offload cart to remove and replace build support platforms, an elevator assembly for supporting and releasably retaining a build platform removably attached to the stereolithography apparatus frame such that elevator forks supporting the build platform can be released into the vat and removed from the stereolithography apparatus with the vat, and a recoater assembly and recoater blade for mapping the resin surface in the vat and applying a fresh coating of resin to a cross-section being built in the vat.

A US patent application US20200316869A1 discloses a stereolithography printing device comprising a vat for photocurable resin and a mixer movable along the bottom of the vat for detection and/or removal of undesired material (cured resin) which adhered to the bottom surface of the vat.

### SUMMARY OF THE INVENTION

There is a need to provide a system for maintaining constant printing conditions for a UV LCD 3D printer, in particular the system for an automatic control of resin level in a vat and for maintaining uniform layer of the resin in the resin vat.

The invention relates to a system for maintaining constant printing conditions for a UV LCD 3D printer, the UV LCD 3D printer comprising a UV light source, an LCD display and a printing platform. The system comprises a vat for a photo-curable resin, the vat being located above the LCD display; a flexible membrane forming a bottom of the vat and a resin level control unit. The resin level control unit comprises a resin tank; a resin level sensor for controlling the level of the resin in the vat; and a peristaltic pump for transferring the resin from the resin tank to the vat. A wiper is located above and adjacently to the flexible membrane, for distributing the resin on the flexible membrane. Air ducts are located between the flexible membrane and the LCD display for drawing air trapped under the flexible membrane during the movement of the wiper.

The flexible membrane shall be transparent for the UV light and be made of a hydrophobic material with low adhesion. The flexible membrane may be made of a material selected form a group of fluoropolymers. Preferably the Young modulus of the material selected for the flexible membrane measures between 300 and 600 MPa.

The wiper allows to maintain the flexible membrane parallel to the LCD display and simultaneously perpendicular to the light beams emitted from the light source before each consecutive printing step. This allows to keep high quality and accuracy of the prints, in particular lack of air intrusions in the printed object. Moreover, the air trapped between the flexible membrane and the LCD display would cause additional light refractions when passing through different medium. Such refractions would cause curing unintended pixels of the resin.

The air ducts which are located between the flexible membrane and the LCD display, preferably near the sides of the vat, help to remove air which is trapped under the flexible membrane.

The resin level control unit may further comprise a strain gauge for measuring the mass of a resin tank.

The strain gauge allows to detect when the amount of resin in the resin tank is insufficient to maintain the desired resin level in the vat during the printing process. Therefore, the user may be notified before the resin tank is depleted, to replace the tank (for example to replace a bottle with the resin), or may be notified before the starting of the printing process that the amount of resin present in the resin tank is insufficient for the process to be completed without interruption. Controlling the resin level in the vat allows keeping the printed objects submerged in the resin at a constant level during the entire printing process.

Moreover, the strain gauge for measuring the mass of the resin tank allows detecting excessive withdrawal of the resin from the resin tank to the vat. Such situation may occur when the resin level sensor is malfunctioning or is blocked and gives a prolonged or constant signal for activating the peristaltic pump. When a significant drop of weight of the resin tank, which is above the specified value (the value reflecting normal usage of the resin during the printing process) is detected, the peristaltic pump can be stopped to avoid overfilling of the vat.

The peristaltic pump can be also configured to transfer the resin from the vat to the resin tank.

Therefore, the resin can be safely transferred back to the resin tank when a user needs to change the type of the resin or needs to change the resin vat.

The invention also relates to a UV LCD 3D printer comprising the system for maintaining constant printing conditions as described herein.

These and other features, aspects and advantages of the invention will become better understood with reference to the following drawings, descriptions and claims.

### BRIEF DESCRIPTION OF DRAWINGS

The disclosed invention is shown by means of preferable embodiments in a drawing, where in:
Fig. 1 presents schematically a UV LCD 3D printer;
Fig. 2A-2D present a flexible membrane and air ducts during the printing process;
Fig. 3A-3D present an operation of a resin level control unit during the printing process;
Fig. 4A-4D present an operation of a wiper during the printing process, in which some air is trapped under the flexible membrane;
Fig. 5A-5E present the operation of the wiper during the printing process, in which the resin level in a vat is not uniform;
Fig. 6 presents details of the system for maintaining constant printing conditions according to the invention;
Fig. 7 presents the vat with the wiper.

### DETAILED DESCRIPTION OF EMBODIMENTS

The following detailed description is of the best currently contemplated modes of carrying out the invention. The description is not to be taken in a limiting sense, but is made merely for the purpose of illustrating the general principles of the invention.

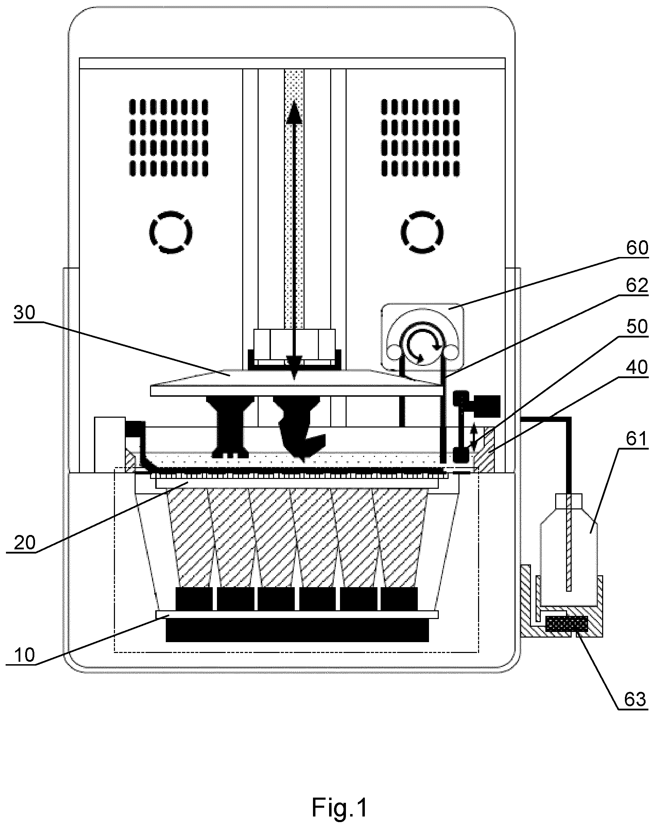

Fig. 1 presents schematically a UV LCD 3D printer. It comprises a UV light source 10, an LCD display 20 and a printing platform 30.

A vat 40 for a photo-curable resin is located above the LCD display 20. The bottom of the vat 40 is formed by a flexible membrane 41. Therefore, the flexible membrane 41 is located on the surface of the LCD display 20. The flexible membrane 41 is transparent for the UV light and is made of a hydrophobic fluoropolymer material with low adhesion.

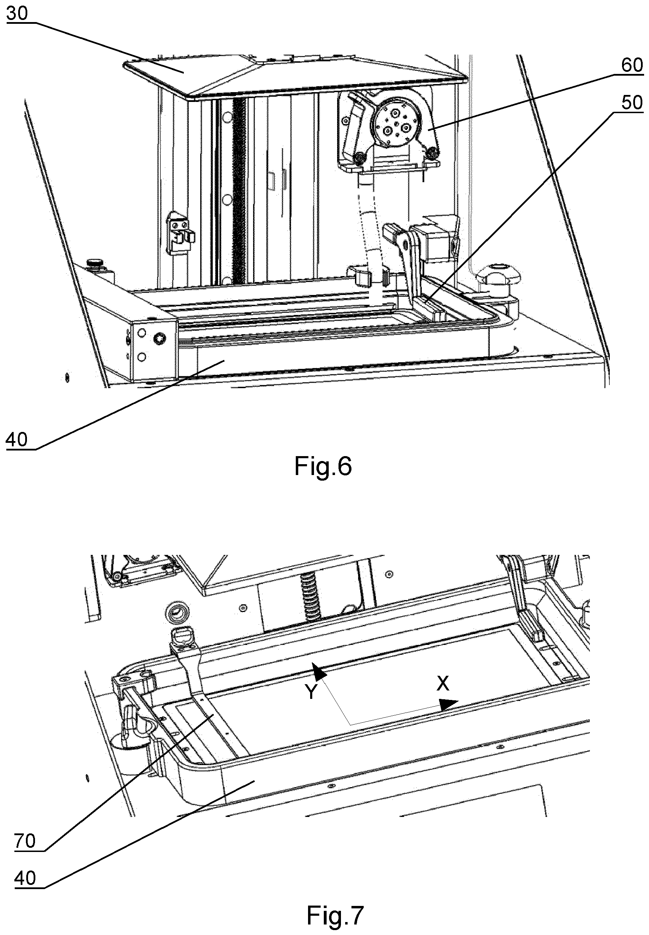

The system for maintaining constant printing conditions, shown in more details in Fig. 6, comprises a resin level control unit that includes a resin tank 61, a resin level sensor 50 for controlling the level of the resin in the vat 40. A peristaltic pump 60 is used for transferring the resin from the resin tank 61 to the vat 40, as well as it can be used to transfer the resin from the vat 40 to the resin tank 61. A strain gauge 63 can be used for measuring the mass of a resin tank 61.

Above and adjacently to the flexible membrane 41 there is a wiper 70 (as shown in details in Fig. 7) that distributes the resin on the flexible membrane 41.

Between the flexible membrane 41 and the LCD display 20 there are air ducts 42 that draw air trapped under the flexible membrane 41 during the movement of the wiper 70.

During the printing process, after curing a particular layer of the object 2, this layer temporarily adheres to the flexible membrane 41. To detach the object 2 from the flexible membrane 41, the platform 30, to which the first layer (and the first side) of the object 2 is attached, is lifted. The flexible membrane 41 deforms into an arc which decreases the force needed to detach the newly printed section/layer of the object 2 from the flexible membrane 41 without damaging the newly formed layer.

After the object 2 is detached form the flexible membrane 41, the membrane returns to its primary position which is adjacent to the LCD display 20. To eliminate air trapped between the flexible membrane and the LCD display 20 a wiper 70, which is in the vat 40, is moved along the vat 40 pushing the flexible membrane 41 towards the surface of the LCD display 20, thereby assuring that the flexible membrane 41 is adjacent to the LCD display 20 on its whole surface.

The air ducts 42 which are located between the flexible membrane 41 and the LCD display 20, preferably near the sides of the vat 40, help to remove air which is trapped under the flexible membrane 41.

Moreover, the movement of the wiper 70 allows to distribute layer of the resin 1 evenly on the flexible membrane 41 (the layer having the same thickness on the whole surface of the flexible membrane) as well as improves the adherence of the flexible membrane 41 to the LCD display 20. The movement of the wiper 70 may be triggered after each printing step (after curing a single section of the object 2), as some irregularities (regions without resin) may occur after rising the printing platform 30, or depending on the type and density of the resin, may be triggered after longer intervals. The irregularities may occur due to surface tension of the resin or may be caused by the geometry of the created objects. Uniform distribution of the resin on the flexible membrane 41 allows to eliminate the appearance of artifacts on prints such as layer shifts relative to each other. Moreover, the wiper 70 is used after each actuation of the peristaltic pump 60 in order to distribute the resin on the flexible membrane 41 after refilling the vat 40.

The wiper 70 may be also used to enhance the removal of the resin from the vat 40 back to the resin tank 61, when it is pumped by the peristaltic pump 60 by pushing the resin towards one end of the vat 40 at which the resin transfer pipe 62 is located.

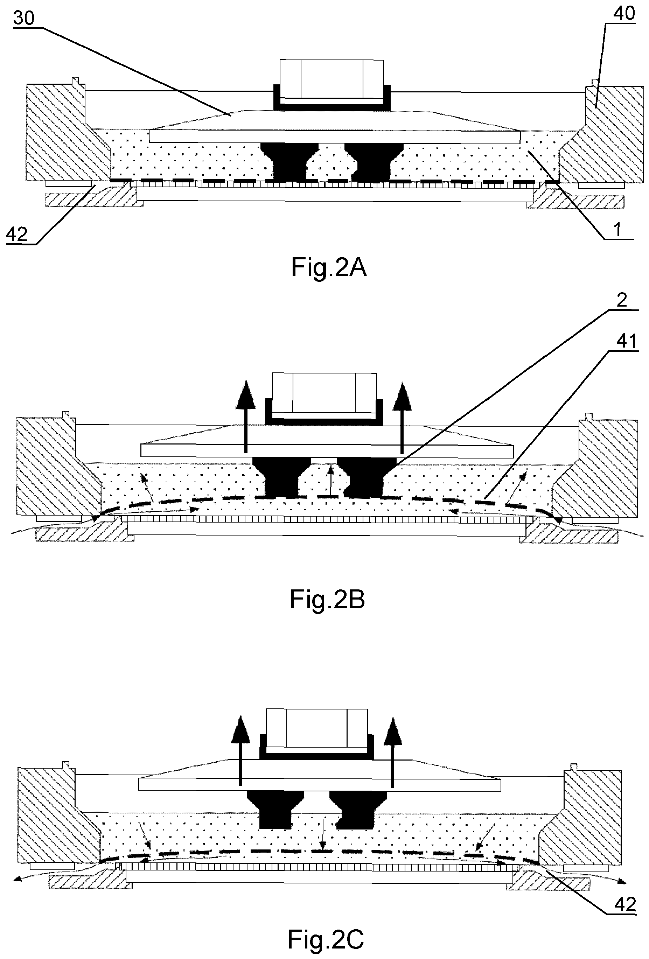

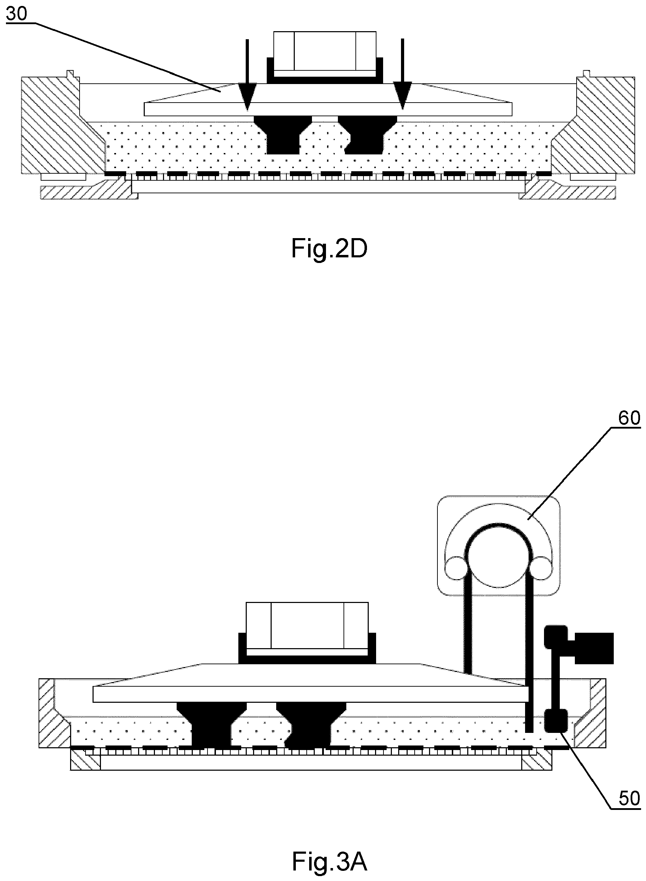

Figs. 2A-2D present the flexible membrane 41 and the air ducts 42 during the printing process. In Fig. 2A the printing platform 30 is in a position where the objects being printed are located just above (at the distance equal to a layer of resin which is to be illuminated and cured in single printing step) the flexible membrane 41 which is located at the surface of an LCD display 20 (the flexible membrane 41 forms the bottom of a vat 40). Next, in Fig. 2B, after illuminating the layer of the object 2, the printing platform 30 is lifted. The objects 2 temporarily adhere to the flexible membrane 41 deforming it and lifting it above the surface of the LCD display. When the flexible membrane 41 is lifted the ambient air is drawn under the membrane 41 through the air ducts 42. Next, in Fig. 2C the flexible membrane 41 is detached from the objects 2 and it returns to its initial position, which is on the surface of the LCD display 20. The air which earlier accumulated under the flexible membrane 41 escapes through the air ducts 42. Subsequently, in Fig. 2D the printing platform 30 is lowered and the next layer of the resin may be cured.

Due to the air ducts 42, the air which accumulated under the flexible membrane 41 during the rising of the printing platform 30 is easily withdrawn before the next printing step. In consequence, the flexible membrane 41 is parallel to the LCD display 20 and is perpendicular to the light rays emitted from the UV light source 10. As a result, the quality of printed objects is improved. The UV light source 10 may have a form of the UV light panel.

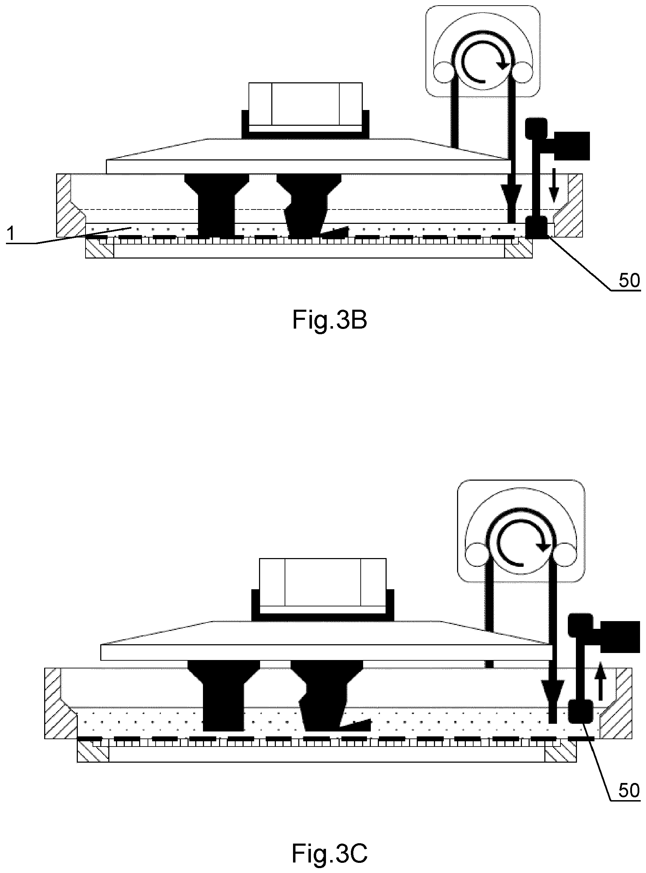

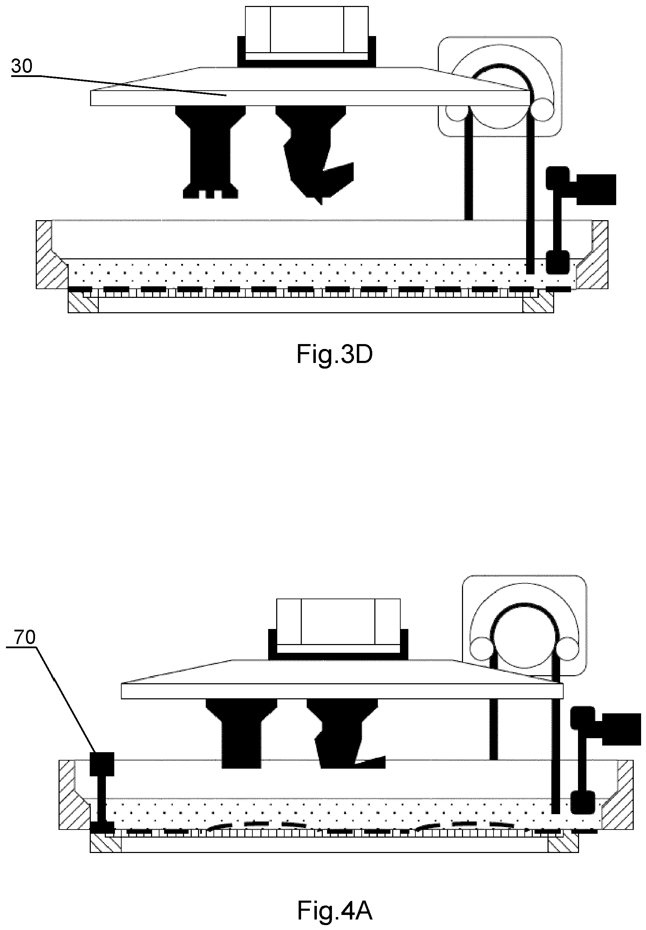

Figs. 3A-3D present the operation of a resin level control unit during the printing process. The resin level control unit comprises a resin tank 61, a resin level sensor 50 for controlling the resin level in the vat 40 and a peristaltic pump 60 for transferring the resin from the resin tank 61 to the vat 40. Fig. 3A shows the configuration where the resin level 1 in the vat 40 is at an acceptable level. The resin level sensor 50 is in its upper position. The resin level sensor 50 may have a form of a float sensor. After curing multiple layers of a printed object, the resin level in the vat decreases (Fig. 3B) and the resin level sensor 50 lowers its position sending a signal to a peristaltic pump 60 to pump resin from the resin tank 61 to the vat 40 until the desired level of resin is achieved (Fig. 3C). The resin level control is performed until the printing procedure is finished (Fig. 3D).

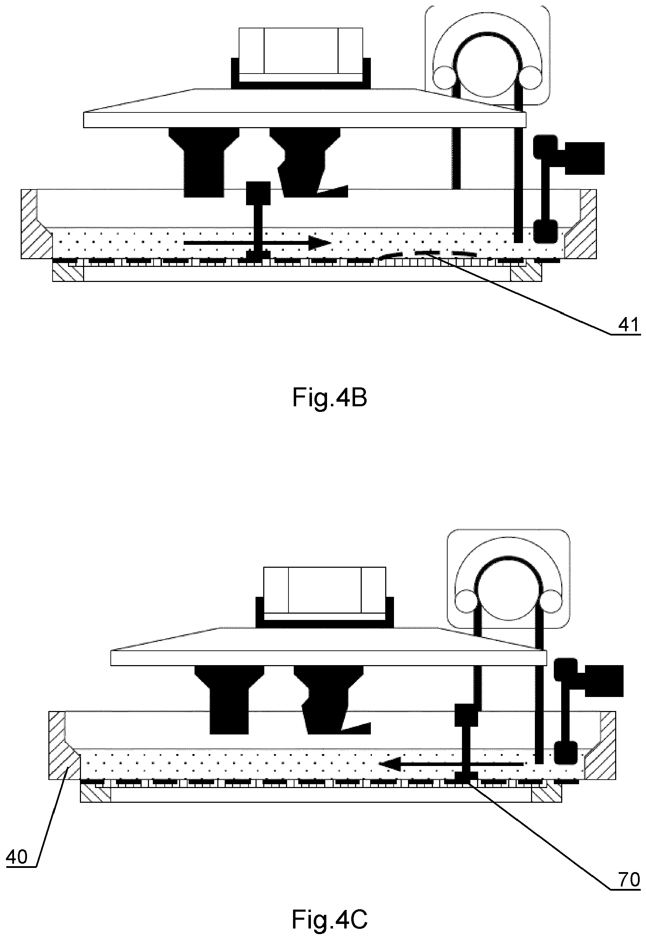

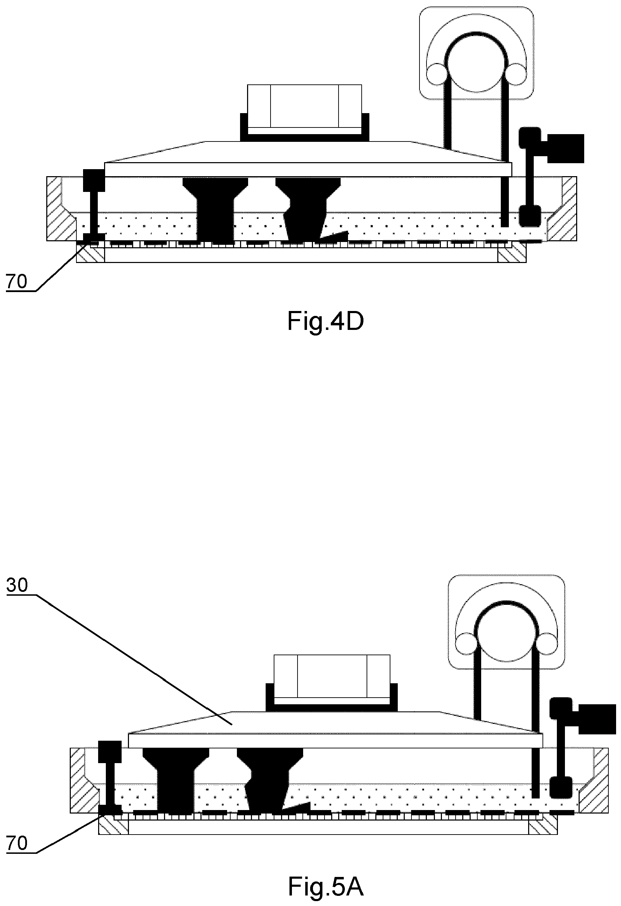

Figs. 4A-4D present the operation of a wiper during the printing process. It may happen that during the printing process, after curing multiple layers of the object 2, some air is trapped under the flexible membrane 41, which leads to the membrane not being adjacent to the whole surface of the LCD display 20, as presented schematically in Fig. 4A. Such nonlinearity of the flexible membrane 41 may decrease the quality of printed objects. Therefore, after each consecutive layer of the object 2 is created and the printing platform 30 is in its upper position, the wiper 70 is moved along the vat 40, pressing the flexible membrane 41 towards the surface of the LCD display 20 (Fig. 4B). This allows to push the remaining air out from the area between the flexible membrane 41 and the surface of the LCD display 20. Before the printing platform 30 is lowered again the wiper 70 returns to its base position (Fig. 3C). As a result, the flexible membrane 41 is positioned in parallel to the whole surface of the LCD display 20 (Fig. 4D). The wiper 70 may be configured to move along X axis or along Y axis of the vat 40 (Fig. 7).

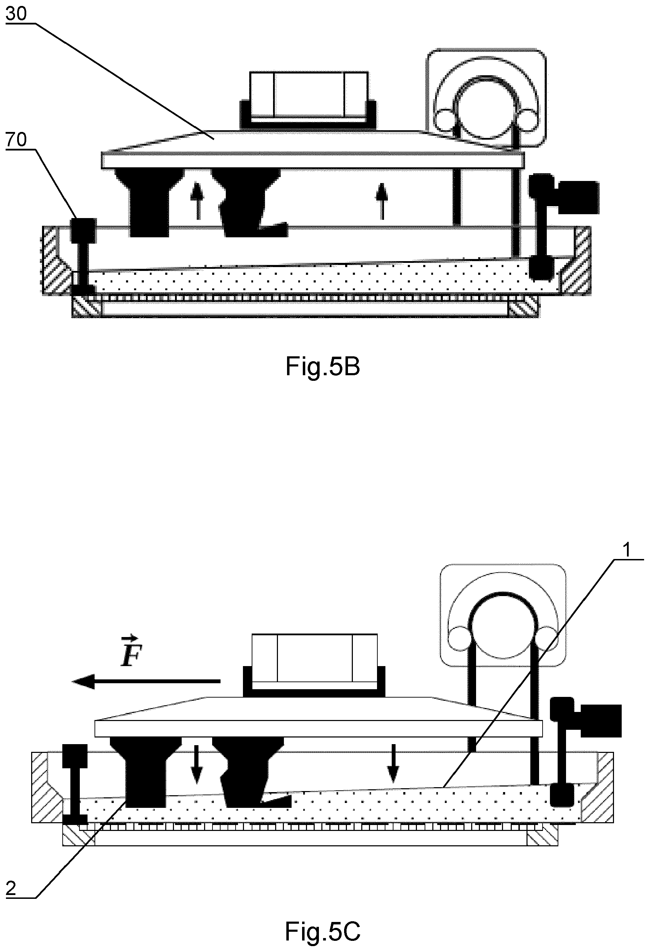

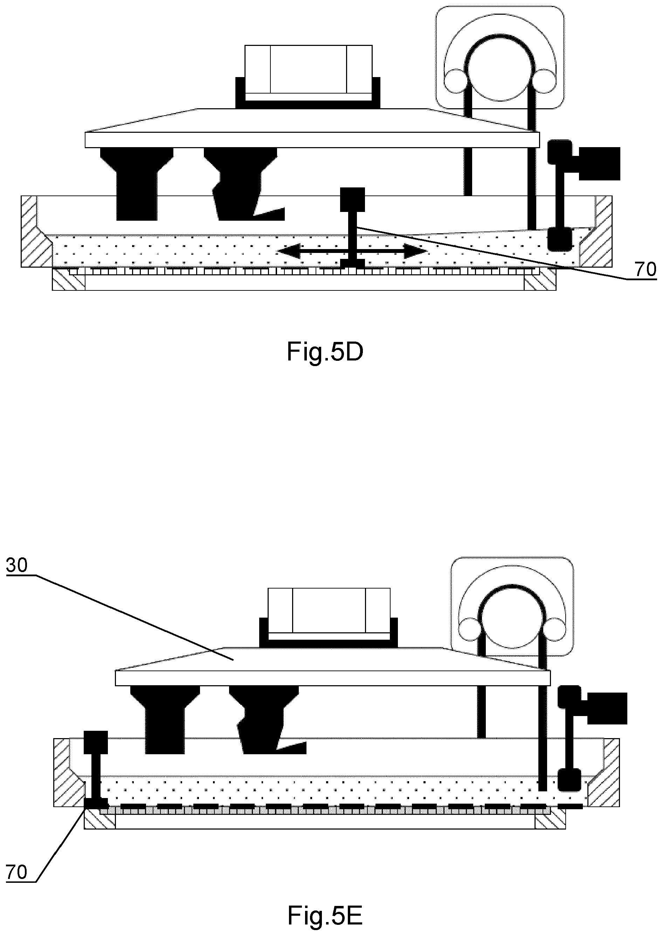

Figs. 5A-5E present the operation of the wiper 70 during the printing process, in which the resin level 1 on the flexible membrane 41 is not uniform. It may happen that during the printing process, after creating several layers/sections of the object 2, the level of the resin in the vat 40 is not uniform (Fig. 5B). Such situation may for example be caused by the geometry of the objects being created. When attempting to continue printing when the resin level is not uniform (Fig. 5C) some additional non uniform forces may arise acting in various directions on the currently created layer of the object. Such phenomenon negatively influences the quality of printing. Therefore, moving the wiper 70 across the vat 40 allows equalizing the level of the resin 1 so that the resin forms a layer of uniform thickness above the flexible membrane 41 (Fig. 5D).

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A system for maintaining constant printing conditions for a UV LCD 3D printer, the UV LCD 3D printer comprising a UV light source (10), an LCD display (20) and a printing platform (30), wherein the system comprises:
- a vat (40) for a photo-curable resin, the vat (40) being located above the LCD display (20);
- a flexible membrane (41) forming a bottom of the vat (40); and
- a resin level control unit comprising:
- a resin tank (61);
- a resin level sensor (50) for controlling the level of the resin in the vat (40); and
- a peristaltic pump (60) for transferring the resin from the resin tank (61) to the vat (40);
**characterized in that** the system further comprises:
- a wiper (70) located above and adjacently to the flexible membrane (41), for distributing the resin on the flexible membrane (41); and
- air ducts (42) located between the flexible membrane (41) and the LCD display (20) for drawing air trapped under the flexible membrane (41) during the movement of the wiper (70).

2. The system according to claim 1, wherein the flexible membrane (41) is made of a material selected form a group of fluoropolymers.

3. The system according to any of previous claims, wherein the Young modulus of the material selected for the flexible membrane (41) measures between 300 and 600 MPa.

4. The system according to any of previous claims, wherein the resin level control unit further comprises a strain gauge (63) for measuring the mass of a resin tank (61).

5. The system according to any of previous claims, wherein the peristaltic pump (60) is also configured to transfer the resin from the vat (40) to the resin tank (61).

6. A UV LCD 3D printer comprising the system for maintaining constant printing conditions according to any of previous claims.
